# EUROPÄISCHE PATENTSCHRIFT

(11) **EP 0 477 660 B1**
(45) Veröffentlichungstag und Bekanntmachung des Hinweises auf die Patenterteilung: **12.11.1997**
(21) Anmeldenummer: 91115345.0
(22) Anmeldetag: 11.09.1991
(51) Int. Cl.: H02J 13/00

(54) **Schaltungsanordnung zum Empfang von Informationen, die über Starkstromleitungen übertragen werden**
Circuit for receiving information carried by power lines
Circuit de reception d'informations transmises sur les lignes de puissance

(30) Priorität: 26.09.1990 DE 4030397
(43) Veröffentlichungstag der Anmeldung: 01.04.1992
(73) Patentinhaber: Zumtobel Aktiengesellschaft, A-6850 Dornbirn (AT)
(72) Erfinder: Herter Eberhard, W-7000 Stuttgart (DE)
(74) Vertreter: Fleck, Hermann-Josef, Dr.-Ing.

(56) Entgegenhaltungen:
- EP-A- 0 089 681
- FR-A- 2 334 226
- US-A- 4 918 422

## Beschreibung

Die Erfindung betrifft eine Schaltungsanordnung zum Empfang von Informationen, die über eine zweiadrige Starkstromleitung übertragen werden und eine Frequenz aufweisen, welche um Größenordnungen höher ist als die Frequenz der auf der Starkstromleitung anstehenden, niederfrequenten Wechselspannung.

Eine derartige Schaltungsanordnung ist aus der Zeitschrift "Elektronik, 7.Okt. 1983, Seiten 100 bis 104" bekannt. Diese bekannte Schaltungsanordnung erfordert teure Bauelemente und ist zudem im Aufwand beachtlich.

Auch aus der CH-A 607 467 geht eine derartige Schaltungsanordnung als bekannt hervor. Diese Druckschrift beschreibt eine Schaltungsanordnung zum Empfang von Informationen, die über eine zweiadrige Starkstromleitung übertragen werden und eine höhere Frequenz aufweisen als die niederfrequente Wechselspannung. In dieser Druckschrift geht es um die Kompensation von Störsignalen, die sich der zu empfangenden Information überlagern. Die Störsignale stellen dabei, wie beispielsweise in Spalte 4, Zeilen 47 bis 55 angegeben ist, eine Verzerrung und Mischung der an den Klemmen des Fernsteuerempfängers insgesamt auftretenden Wechselspannungen, d.h. der Netzspannung, Netzspannungs-Harmonischen und eintreffenden gewünschten und störenden Signale mit zahlreichen Frequenzen dar. Entsprechend aufwendig und konstruktiv an die Problematik angepaßt ist auch die Auswerteschaltung ausgelegt.

Bei der Informationsübertragung über symmetrische Leitungen (Zweidrahtleitungen) ist der Einfluß von Gleichtaktstörungen auszuschalten. Auf jeder Zweidrahtleitung werden durch benachbarte energiereiche Systeme, wie Bahnfahrleitungen, Funksender und dgl., in den beiden Adern gleichsinnige und gleich große Längsspannungen induziert. Da in der Praxis stets eine oder mehrere, an die Zweidrahtleitung angeschlossene Schaltungen oder Leitungsabschlüsse einen mehr oder weniger direkten Bezug zur Erde haben, der ohmisch, kapazitiv und dgl. sein kann, und da das Leitungssystem selbst Kapazitäten gegen Erde aufweist, können sich in den beiden Adern gleich große Längsströme ausbilden. Betrachtet man an beliebiger Stelle der Zweidrahtleitung die Potentiale der beiden Adern, dann werden diese durch den Einfluß der Längsspannungen bzw. -ströme gleichsinnig verschoben, d.h. die Spannung zwischen den beiden Adern ist unabhängig von den Längsspannungen bzw. -strömen.

Diese Erkenntnis wird bei der Überwachung des Schleifenzustandes einer gleichstromgespeisten Zweidrahtleitung eines Fernmelde- oder Fernsprechnetzes ausgenützt, indem zur Auswertung der zwischen den Adern auftretenden Spannung an die Zweidrahtleitung eine Brückenschaltung angeschaltet wird, deren Diagonalzweig mit der Auswerteschaltung (Diskriminator) verbunden ist. Bei diesem Einsatz ist die zwischen den Adern auftretende Gleichspannung selbst die Information.

Bei der Übertragung von Informationen über eine Starkstromleitung ist die niederfrequente Wechselspannung ein Störfaktor für die Informationsübertragung. Die Auswerteschaltung für die Informationen darf auf diese Wechselspannung nicht ansprechen. Um dies zu vermeiden, sehen die bekannten Informationsübertragungssysteme sowohl auf der Sende- als auch der Empfangsseite umfangreiche Filterschaltungen vor, die die Entkopplung der beiden Signale - niederfrequente Wechselspannung und höherfrequente Informationen - vornehmen. Da die Starkstromleitung in der Regel eine sehr hohe leistungsstarke Wechselspannung führt, müssen die Bauelemente der Filterschaltungen auf eine entsprechend hohe Betriebsspannung ausgelegt werden. Derartige Bauelemente sind nicht nur voluminös, sondern auch sehr teuer.

Es ist Aufgabe der Erfindung, eine Schaltungsanordnung der eingangs erwähnten Art zu schaffen, die unter Ausschaltung des Einflusses der Längsspannungen bzw. -ströme auf der Starkstromleitung einen Empfang nur der höherfrequenten Informationen sicherstellt und dazu dennoch nur einfache und billige Bauelemente verwendet.

Diese Aufgabe wird nach der Erfindung mit den Merkmalen des Anspruchs 1 gelöst.

Bei dieser Ausgestaltung erfolgt die Anschaltung der Auswerteschaltung über die hochohmige Widerstandsbrücke, deren Brückenwiderstände nur auf sehr kleine Leistung ausgelegt und daher sehr billig und klein sind. Das Brückengleichgewicht wird durch den Kondensator nur für die höherfrequenten Informationen so stark verändert, daß diese im Diagonalzweig der Widerstandsbrücke überwiegen, während der Kondensator für die niederfrequente Wechselspannung das Brückengleichgewicht nur unwesentlich verändert. Am Diagonalzweig der Widerstandsbrücke tritt daher nur eine kleine Störkomponente der niederfrequenten Wechselspannung auf, die in der Auswerteschaltung auf einfache Weise unterdrückt werden kann.

Um das Brückengleichgewicht durch den Kondensator sehr stark zu verändern, ist die Ausgestaltung so vorgenommen, daß die den Adern der Starkstromleitung zugekehrten Spannungsteiler-Widerstände wesentlich, z.B. mindestens eine Größenordnung, niederohmiger sind als die der Auswerteschaltung zugekehrten Spannungsteiler-Widerstände.

Für die galvanische Trennung der Auswerteschaltung von der Widerstandsbrücke ist nach einer Ausgestaltung vorgesehen, daß die galvanische Trennung zwischen der Widerstandsbrücke und der Auswerteschaltung aus einem Koppelkondensator und einem Koppelüberträger besteht. Die Ankopplung der Auswerteschaltung kann dadurch noch verbessert werden, daß die galvanische Trennung zwischen der Widerstandsbrücke und der Auswerteschaltung Hochpaß- oder Bandpaßverhalten für die Informationen aufweist.

Auf diese Weise werden die unerwünschten Signalkomponenten der niederfrequenten Wechselspannung, die im Diagonalzweig der Widerstandsbrücke noch auftreten, weiter gedämpft, so daß sie keinen Einfluß mehr auf die Auswerteschaltung haben.

Bei dieser Lösung kann auf eine getrennte Spannungsquelle für die Speisung der Auswerteschaltung dadurch verzichtet werden, daß die Auswerteschaltung von einer Gleichspannung gespeist ist, die von der Wechselspannung der Starkstromleitung abgeleitet, aber galvanisch von dieser getrennt ist.

Die Erfindung wird anhand von dem in der Zeichnung dargestellten Ausführungsbeispiel näher erläutert. Es zeigt:

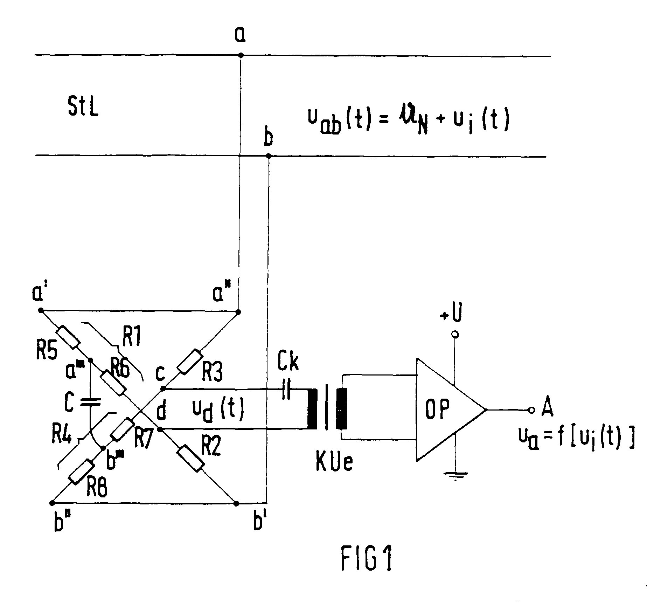

- Fig. 1: die Schaltungsanordnung zum Empfang der höhertrequenten Informationen.

Bei diesem Ausführungsbeispiel nach Fig. 1 steht auf den Adern a und b der Starkstromleitung StL während der Informationsübertragung wieder die Spannung u_{ab}(t) = 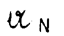 +uᵢ(t) an. Die Widerstandsbrücke besitzt vier gleich große Brückenwiderstände R1, R2, R3 und R4, d.h. R1=R2=R3=R4=R, wobei die Brückenwiderstände R1 und R2 sowie die Brückenwiderstände R3 und R4 jeweils in Reihe geschaltet Brückenzweige bilden, die über die Anschlüsse a', b' und a", b" jeweils den Adern a,b, der Starkstromleitung StL parallelgeschaltet sind. An den Diagonalzweig c,d der Widerstandsbrücke wird durch den Koppelkondensator Ck und den Koppelübertrager kUe galvanisch getrennt die als Operationsverstärker ausgebildete Auswerteschaltung OP angeschlossen. Die Speisung der Auswerteschaltung OP erfolgt von der Gleichspannung U, die von der Wechselspannung der Starkstromleitung abgeleitet, aber galvanisch von dieser getrennt ist. Diese Ankopplung der Auswerteschaltung OP kann zusätzlich Hochpaß- oder Bandpaßverhalten aufweisen, um Restanteile der niederfrequenten Wechselspannung _{N}, die noch am Diagonalzweig c,d anstehen, so zu dämpfen, daß sie die Auswertung der höherfrequenten Informationen uᵢ(t) nicht mehr beeinträchtigen. Am Ausgang A des Operationsverstärkers wird eine Ausgangsspannung uₐ(t) gewünscht, die im wesentlichen nur noch von den höherfrequenten Informationen uᵢ(t) bestimmt ist.

Um den Anteil der niederfrequenten Wechselspannung 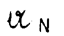 im Diagonalzweig c,d zu reduzieren, werden die Brückenwiderstände R1 und R4 als Spannungsteiler mit den jeweils in Reihe geschalteten Spannungsteiler-Widerständen R5 und R6 bzw. R7 und R8 ausgebildet, wobei R1 = R5+R6 = R und R4 = R7+R8 = R ist. Dabei sind die den Adern a und b zugekehrten Spannungsteiler-Widerstände R5 und R8 mindestens um eine Größenordnung niederohmiger als die den am Diagonalzweig c,d angeschalteten Auswerteschaltung OP zugekehrten Spannungsteiler-Widerstände R6 und R7. Die Verbindungspunkte a''' und b''' der Spannungsteiler werden über den Kondensator C miteinander verbunden. Dieser Kondensator C ist so bemessen, daß er das Brückengleichgewicht für die niederfrequente Wechselspannung 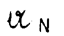 nur unwesentlich verändert, während die Veränderung für die höherfrequenten Informationen uᵢ(t) sehr groß ist. Dies hat zur Folge, daß von der niederfrequenten Wechselspannung 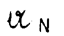 nur ein vernachlässigbarer Restanteil am Diagonalzweig c,d der Widerstandsbrücke ansteht, der durch die galvanisch getrennte Ankopplung der Auswerteschaltung OP noch zusätzlich gedämpft werden kann, so daß die Diagonalspannung u_{d}(t) und damit die Eingangsspannung an der Auswerteschaltung OP im wesentlichen durch die höherfrequenten Informationen uᵢ(t) gegeben ist. Der Anteil der höherfrequenten Informationen uᵢ(t) an der Diagonalspannung u_{d}(t) wird aber durch die starke, frequenzabhängige Veränderung des Gleichgewichtes der Widerstandsbrücke stark erhöht und wird entsprechend betont der Auswerteschaltung OP zugeführt, so daß deren Ausgangssignal u_{A}(t) = f [uᵢ(t)] im wesentlichen wieder durch die höherfrequenten Informationen uᵢ(t) bestimmt wird.

Bei dem Ausführungsbeispiel wurde mit R=R1=R2=R3=R4 = 220 k , R5 = R8 = 20 k , R6=R7 = 200 k und C = 3,3 nF bei 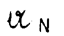 = 220V/50 Hz und einer Frequenz der Informationen uᵢ(t) von 5 kHz ein eindeutig auswertbares Ausgangssignal u_{A}(t) erhalten.

## Patentansprüche

1. Schaltungsanordnung zum Empfang von Informationen, die über eine zweiadrige Starkstromleitung übertragen werden und eine Frequenz aufweisen, welche um Größenordnungen höher ist als die Frequenz der auf der Starkstromleitung anstehenden, niederfrequenten Wechselspannung,
dadurch gekennzeichnet,
daß eine Auswerteschaltung (OP) für die Informationen [ui(t)] an den einen Diagonalzweig (c,d) einer hochohmigen Widerstandsbrücke mit gleich großen Brückenwiderständen (R1, R2, R3, R4) zur Eingabe der Diagonalspannung U_{d}(t) galvanisch getrennt angeschaltet ist,
daß der andere Diagonalzweig (a', a"; b', b") in der Weise mit der Starkstromleitung gekoppelt ist, daß die beiden in Reihe geschalteten Brückenzweige mit den Brückenwiderständen (R1 und R2; R3 und R4) den Adern (a,b) der Starkstromleitung (StL) parallelgeschaltet sind,
daß der der einen Ader (a) zugekehrte Brückenwiderstand (R1) des anderen Brückenzweiges und der der anderen Ader (b) zugekehrte Brückenwiderstand (R4) des anderen Brückenzweiges als Spannungsteiler (R5, R6 und R7, R8) ausgebildet sind, wobei jeder Spannungsteiler aus einem hoch- und einem niederhohmigen Widerstand besteht, und
daß die Verbindungspunkte (a'", b'") der Spannungs-Widerstände (R5 und R6, R7 und R8) über einen Kondensator (C) miteinander verbunden sind, der so bemessen ist, daß er für die Informationen [ui(t)] gegenüber den hochohmigen Spannungsteiler-Widerständen (R6, R7) niederohmig ist und daß er das Brückengleichgewicht für die niederfrequente Wechselspannung nur unwesentlich verändert.

2. Schaltungsanordnung nach Anspruch 1,
dadurch gekennzeichnet,
daß die den Adern (a,b) der Starkstromleitung (StL) zugekehrten Spannungsteiler-Widerstände (R5, R8) wesentlich, z.B. mindestens eine Größenordnung, niederohmiger sind als die der Auswerteschaltung (OP) zugekehrten Spannungsteiler-Widerstände (R6, R7).

3. Schaltungsanordnung nach Anspruch 1 oder 2,
dadurch gekennzeichnet,
daß die galvanische Trennung zwischen der Widerstandsbrücke und der Auswerteschaltung (OP) aus einem Koppelkondensator (Ck) und einem Koppelübertrager (KUe) besteht.

4. Schaltungsanordnung nach einem der vorhergehenden Ansprüche,
dadurch gekennzeichnet,
daß die galvanische Trennung zwischen der Widerstandsbrücke und der Auswerteschaltung (OP) Hochpaß- oder Bandpaßverhalten für die Informationen [ui(t)] aufweist.

5. Schaltungsanordnung nach einem der vorhergehenden Ansprüche,
dadurch gekennzeichnet,
daß die Auswerteschaltung (OP) von einer Gleichspannung (U) gespeist ist, die von der Wechselspannung µ_{N}) der Starkstromleitung (StL) abgeleitet, aber galvanisch von dieser getrennt ist.

## Claims

1. Circuit arrangement for receiving information which is transmitted via a two-cored heavy current line and has a frequency which is higher by orders of magnitude than the frequency of the low-frequency a.c. voltage occurring on the heavy current line, characterised in that an evaluating circuit (OP) for evaluating the information [ui(t)] is galvanically separately connected to one diagonal branch (c,d) of a high-impendance resistance bridge having bridge resistors (R1, R2, R3, R4) of identical magnitude for the input of the diagonal voltage U_{d}(t), in that the other diagonal branch (a', a"; b', b") is connected to the heavy current line in such a manner that the two series-connected bridge branches, having the bridge resistors (R1 and R2; R3 and R4), are connected in parallel to the cores (a,b) of the heavy current line (StL), in that the bridge resistor (R1), facing one core (a), of the other bridge branch and the bridge resistor (R4), facing the other core (b), of the other bridge branch are configured as voltage dividers (R5, R6 and R7, R8), each voltage divider comprising a high-impedance resistor and a low-impedance resistor, and in that the junctions (a"', b"') of the voltage resistors (R5 and R6, R7 and R8) are interconnected via a capacitor (C), which is so dimensioned that it is low-impedance for the information [ui(t)] compared with the high-impedance voltage divider resistors (R6, R7), and in that it only negligibly changes the bridge equilibrium for the low-frequency a.c. voltage.

2. Circuit arrangement according to claim 1, characterised in that the voltage divider resistors (R5, R8), facing the cores (a,b) of the heavy current line (StL), are substantially, e.g. at least one order of magnitude, lower-impedance than the voltage divider resistors (R6, R7) facing the evaluating circuit (OP).

3. Circuit arrangement according to claim 1 or 2, characterised in that the galvanic separation between the resistance bridge and the evaluating circuit (OP) comprises a coupling capacitor (Ck) and a coupling transmitter (KUe).

4. Circuit arrangement according to one of the preceding claims, characterised in that the galvanic separation between the resistance bridge and the evaluating circuit (OP) has a high-pass or band-pass behaviour for the information [ui(t)].

5. Circuit arrangement according to one of the preceding claims, characterised in that the evaluating circuit (OP) is supplied by a d.c. voltage (U), which is derived from the a.c. voltage (µ_{N}) of the heavy current line (StL), but which is galvanically separated from said line.

## Revendications

1. Circuit de réception d'informations transmises sur des lignes de puissance à deux conducteurs, informations qui présentent une fréquence supérieure de plusieurs ordres de grandeur à la basse fréquence alternative de la ligne de puissance,
caractérisé
en ce qu'un circuit d'évaluation (OP) pour les informations [ui(t)] est connecté de manière galvaniquement séparée à une branche diagonale (c,d) d'un pont de résistance à haut ohmage comprenant des résistances de pont de même valeur (R1, R2, R3, R4), aux fins de l'injection de la tension diagonale U_{d}(t),
en ce que l'autre branche diagonale (a',a"; b',b") est couplée à la ligne de puissance de manière telle que les deux branches de pont connectées en série, avec les résistances de pont (R1 et R2; R3 et R4), sont couplées en parallèle aux conducteurs (a, b) de la ligne de puissance (StL),
en ce que la résistance de pont (R1) de la branche du pont, faisant face à un conducteur (a), et en ce que la résistance de pont (R4) de l'autre branche du pont faisant face à l'autre conducteur (b), ont la forme de diviseurs de tension (R5, R6 et R7, R8), chaque diviseur de tension étant constitué d'une résistance à haut ohmage et d'une résistance à bas ohmage, et
en ce que les points de connexion (a"', b"') des résistances (R5 et R6, R7 et R8) sont reliées entre eux par l'intermédiaire d'un condensateur (C), qui est calculé de manière telle que pour les informations [ui(t)] il est à bas ohmage en comparaison avec les résistances de diviseur de tension (R6, R7) à haut ohmage, et en ce qu'il ne modifie que de manière minime l'équilibre de pont pour la tension alternative basse fréquence.

2. Circuit suivant la revendication 1,
caractérisé
en ce que les résistances (R5, R8) de diviseur de tension faisant face aux conducteurs (a, b) de la ligne de puissance (StL) ont un ohmage sensiblement inférieur, par exemple d'au moins un ordre de grandeur, à l'ohmage des résistances de diviseur de tension (R6, R7) faisant face au circuit d'évaluation (OP).

3. Circuit suivant la revendication 1 ou 2,
caractérisé
en ce que la séparation galvanique entre le pont de résistance et le circuit d'évaluation (OP) est constituée par un condensateur de couplage (Ck) et par un transmetteur de couplage (KUe).

4. Circuit suivant l'une quelconque des revendications précédentes,
caractérisé
en ce que la séparation galvanique entre le pont de résistance et le circuit d'évaluation (OP) présente un comportement passe-haut ou passe-bande pour les informations [ui(t)].

5. Circuit suivant l'une quelconque des revendications précédentes,
caractérisé
en ce que le circuit d'évaluation (OP) est alimenté par une tension continue (U) qui est dérivée de la tension alternative (µ_{N}) de la ligne de puissance (StL) mais qui en est séparée galvaniquement.
